# EUROPÄISCHE PATENTANMELDUNG

(11) **EP 0 830 891 A1**
(43) Veröffentlichungstag der Anmeldung: **25.03.1998**
(21) Anmeldenummer: 97116507.1
(22) Anmeldetag: 22.09.1997
(51) Int. Cl.: B01J 3/00, B01J 3/04, B01J 19/12, G01N 1/44, G01L 9/00, G01L 19/12, B01L 3/14

(54) **Vorrichtung und Verfahren zum Behandeln einer chemischen Substanz durch Erhitzen unter Druck**

(30) Priorität: 23.09.1996 DE 19639021
(71) Anmelder: Mikrowellen-Systeme MWS GmbH, 7240 Küblis (CH)
(72) Erfinder: Lautenschläger, Werner, 88299 Leutkirch (DE)
(74) Vertreter: Schmidt-Evers, Jürgen, Dipl.-Ing.

(57) **Zusammenfassung**

Als verbessertes Drucküberwachungssystem für Vorrichtungen zum Behandeln einer chemischen Substanz durch Erhitzen unter Druck mit mindestens einem druckfest verschließbaren und zur Aufnahme der Substanz dienenden Behälter (11) wird die Verwendung eines durch den Druck im Behälter (11) verstellbaren Schiebers (5) mit einer Reflexionsfläche (25), eines Lichtsenders (29), der auf den Schieber (5) gerichtetes Licht (31) aussendet, das von der Reflexionsfläche (25) reflektiert wird, und eines Lichtempfängers (30), der das reflektierte Licht (31) aufnimmt und auswertet, vorgeschlagen, wobei Lichtsender (29), Lichtempfänger (30) und Reflexionsfläche (25) so angeordnet sind, daß durch die Änderung der Schieberstellung der Abstand der Reflexionsfläche (25) von dem Lichtsender (29) und/oder Lichtempfänger (30) geändert wird. Weiter wird eine Vorrichtung der oben genannten Art vorgeschlagen, deren zum Andrücken eines Deckels (16) gegen den Behälter (11) dienende federnde Andrückanordnung (18-24) mehrere kaskadenförmig übereinander angeordnete metallische Tellerfedern (22) enthält, wobei die Tellerfeder-Anordnung (19-22) von einem Käfig (23) zur Abschirmung gegen Mikrowellenstrahlung umgeben ist, um eine Erhitzung der Tellerfeder-Anordnung (19-22) durch die Mikrowellenbestrahlung zu verhindern.
Schließlich wird ein Verfahren zum Behandeln einer chemischen Substanz durch Erhitzen unter Druck vorgeschlagen, bei dem die Zufuhr von Heizleistung zu dem Behälter (11) in Abhängigkeit von dem Differentialquotienten des Druckes nach der Zeit gesteuert wird, da dieser eine bessere Regelgröße für die Reaktionen der chemischen Substanzen darstellt als einfache Temperatur- oder Druckgrenzwerte.

## Beschreibung

Die Erfindung betrifft eine Vorrichtung und ein Verfahren zum Behandeln einer chemischen Substanz durch Erhitzen unter Druck mit mindestens einem druckfest verschließbaren und zur Aufnahme der Substanz dienenden Behälter.

Vorrichtungen und Verfahren dieser Art dienen beispielsweise dem Aufschließen, der Elementanalyse oder dem Entwässern von in einem oder mehreren Behältern angeordneten Probenmaterial durch Erhitzen, wobei durch die Erhitzung der Druck in den Behältern ansteigt.

Aus der DE 38 18 697 C2 ist ein Heizgerät zum Erhitzen von Probenmaterial in aus Gehäuse und Deckel bestehenden drucksicheren Probenbehältern bekannt. Bei dieser Vorrichtung erfolgt eine Reduzierung der Heizleistung in Abhängigkeit des Innendruckes im Behälter. Der hierzu verwendete Druckindikator wird durch einen Schieber, der über eine Membran durch den Druck im Behälter verschiebbar ist, und einen Drucksensor oder Schalter, der mit einer Steuerschaltung für die Heizleistung des Heizgerätes verbunden ist, gebildet. Vorzugsweise wird das Heizgerät durch einen Mikrowellenofen gebildet.

Weiter beschreibt die DE 39 19 601 C2 eine Vorrichtung zum Säureaufschluß einer Substanz für die Elementanalyse in einem durch einen Mikrowellenofen erzeugten Mikrowellenfeld unter kontrolliertem Druck in einem abgedichteten Aufschlußgefäß. In der darin offenbarten Vorrichtung, die ausschließlich Teile aus mikrowellen-durchlässigem Material enthält, steht ein mikrowellen-durchlässiger Meßwertaufnehmer einerseits mit einem Stift, dessen vertikale Aufwärtsbewegung ein Maß für die Druckerhöhung im Aufschlußgefäß ist, in Wirkverbindung oder ist lösbar damit verbunden und ist andererseits mit einem außerhalb des Mikrowellenofens angeordneten Druckanzeigegerät oder Steuergerät für die Mikrowellenheizung verbunden. Als mikrowellen-durchlässige Meßwertaufnehmer werden über einen Hebel mechanisch, hydraulisch, pneumatisch (jeweils berührend) oder optisch (berührungslos) arbeitende verwendet.

Der in der DE 39 19 601 C2 vorgeschlagene optische Meßwertaufnehmer besteht dabei im einfachsten Fall aus einem optischen Sender und einem Empfänger, der den vom Sender kommenden Lichtstrahl so lange empfängt bis der Strahlengang durch den nach oben wandernden Stift unterbrochen wird. Das fehlende Empfangssignal löst dann ein Abschalten der Mikrowellenheizung aus. Ebenso kann am oberen Ende des Stiftes ein Reflektor angebracht sein, so daß bei Überschreiten eines bestimmten Druckes Licht von dem Reflektor auf den Empfänger zurückgeworfen und dadurch die Mikrowellenheizung abgeschaltet wird.

Da bei dem angegebenen Stand der Technik sämtliche Teile aus mikrowellendurchlässigem Material bestehen müssen, ist der Einsatz von eigentlich leistungsfähigeren Elementen, beispielsweise zur Abdichtung des Behälters und zur Druckerfassung nicht möglich.

Weiterhin erlauben die bekannten Druckerfassungssysteme keine ausreichende Kontrolle der in den Behältern ablaufenden Reaktionen. Speziell bei der Aufschlußtechnik von organischen Substanzen treten extreme exotherme Reaktionsabläufe auf, die im Normalfall total außer Kontrolle geraten und mit einem extremen Druck- und Temperaturanstieg verbunden sind, was häufig zur Zerstörung der Behälter führt. Im Zusammenhang mit einer normalen Druckerfassung können diese Reaktionen nicht gedämpft werden, da zum Zeitpunkt des Abschaltens der Energiezufuhr bei Überschreitung eines vorgegebenen Druckgrenzwertes in der Regel bereits ein gewisser Teil des Probenmaterials umgesetzt ist und die Reaktion automatisch und unkontrolliert weiterläuft.

Ziel der Erfindung ist es, eine Vorrichtung der eingangs genannten Art mit einem verbesserten Drucküberwachungssystem zu schaffen, in der zudem auch leistungsfähigere Bauteile aus mikrowellen-absorbierendem Material verwendet werden können.

Weiter soll ein Verfahren angegeben werden, das aufgrund der Drucküberwachung eine bessere Kontrolle der in den Behältern ablaufenden Reaktion ermöglicht, so daß ein Außerkontrollegeraten der Reaktion weitestgehend vermieden werden und die Reaktion bei konstantem Druck kontrolliert fortgeführt werden kann.

Diese Aufgabe wird zum einen durch eine eingangs benannte Vorrichtung mit den Merkmalen des Anspruches 1 gelöst. Die berührungslose optische Meßwertaufnahme des in Abhängigkeit vom Druck im Behälter veränderten Abstandes zwischen Reflexionsfläche und Lichtsender und/oder Lichtempfänger erlaubt eine kontinuierliche Überwachung des Druckes bzw. der Druckänderung im Behälter bei gleichzeitig hoher Genauigkeit.

Ferner wird die Aufgabe durch eine Vorrichtung mit den Merkmalen des Anspruches 8 gelöst. Die Ausführung des Andruckteiles aus mehreren kaskadenförmig übereinander angeordneten Tellerfedern aus Federstahl bewirkt einen nahezu linear-proportional zum Druck verlaufenden Verstellweg des Deckels über einen großen Wegbereich, wodurch auch der Verstellweg eines mit dem Deckel verbindbaren Schiebers linear-proportional verläuft. Um eine Erhitzung der Tellerfeder-Anordnung zu verhindern muß diese gegen die Mikrowellenstrahlung abgeschirmt werden, was durch einen speziell ausgeführten Metallkäfig erreicht wird, der als Faraday'scher Käfig gegen die Mikrowellenstrahlung fungiert.

Die Aufgabe der Erfindung wird ferner durch ein Verfahren nach Anspruch 22 gelöst. Der Differentialquotient Druckänderung pro Zeit stellt eine wesentlich bessere Regelgröße dar als einfache Druck- oder Temperaturgrenzwerte, da er das Einsetzen einer Reaktion zu einem früheren Zeitpunkt anzeigt und somit die Reaktion rechtzeitig gedämpft werden kann.

Weitere Ausgestaltungen und Weiterbildungen der Erfindung sind Gegenstand der Unteransprüche.

Ausführungsbeispiele der erfindungsgemäßen Vorrichtung und eines erfindungsgemäßen Verfahrens werden nun anhand der beigefügten Zeichnung erklärt. Es zeigen:
- Fig. 1: eine schematische Darstellung einer erfindungsgemäßen Vorrichtung;
- Fig. 2: ein Ausführungsbeispiel einer erfindungsgemäßen Behälteranordnung mit druckdichtem Behälter und Druckerfassungssystem im Schnitt;
- Fig. 3: ein zweites Ausführungsbeispiel einer erfindungsgemäßen Vorrichtung ausschnittweise in Draufsicht;
- Fig. 4: das Ausführungsbeispiel von Fig. 3 im Schnitt;
- Fig. 5: einen beispielhaften Ausschnitt einer Meßkurve des Druckerfassungssystems;
- Fig. 6: eine ausschnittweise Vergrößerung von Fig. 4; und
- Fig. 7: ein Druck-Zeit-Diagramm zur Erläuterung des erfindungsgemäßen Verfahrens.

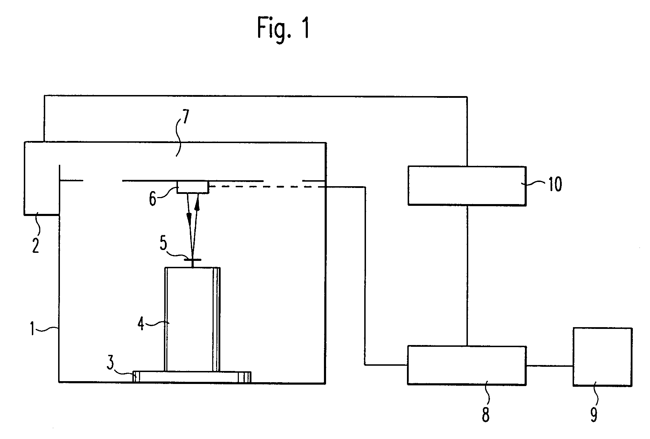

Fig. 1 zeigt schematisch eine erfindungsgemäße Vorrichtung. Die Vorrichtung besteht aus einem Mikrowellenofen mit einem mikrowellen-abschirmenden Gehäuse 1, einem Mikrowellengenerator 2 und einem Mittel 7 zur Übertragung der Mikrowellen vom Mikrowellengenerator 2 in den Innenraum des Gehäuses 1. Im Innenraum des Gehäuses 1 befindet sich auf einer Platte 3 eine Behälteranordnung 4 mit einem druckfest verschließbaren Behälter zur Aufnahme der Substanz. An der Oberseite der Behälteranordnung 4 befindet sich ein als Druckindikator dienender Schieber 5, dessen vertikale Position ein Maß für den Druck im Behälter ist und an dessen Oberseite ein Reflektor angebracht ist. Oberhalb der Behälteranordnung 4 und des Schiebers 5 befindet sich im Innenraum des Gehäuses 1 eine optische Wegerfassungsvorrichtung 6 mit einem Lichtsender, der auf den Schieber 5 gerichtetes Licht aussendet, und einem Lichtempfänger, der das vom Reflektor auf dem Schieber 5 reflektierte Licht aufnimmt.

Die optische Wegerfassungsvorrichtung 6 ist mit einer außerhalb des Gehäuses 1 angeordneten Auswerteeinheit 8 verbunden, die das vom Lichtempfänger aufgenommene reflektierte Licht auswertet und den Druck bzw. die Druckänderung im Behälter bestimmt. Die Auswerteeinheit 8 ist mit einer Ein- und Ausgabeeinheit 9 verbunden, über die der Benutzer das Verfahren steuern und kontrollieren kann. Ferner ist die Auswerteeinheit 8 mit einem Steuerschaltungsteil 10 verbunden, das zur Steuerung der Mikrowellenleistung entsprechend den ausgewerteten Meßergebnissen mit dem Mikrowellengenerator 2 gekoppelt ist.

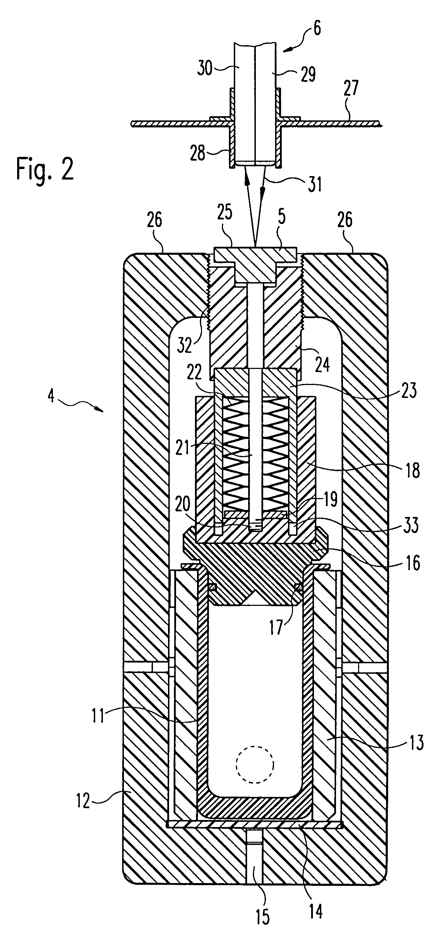

In Fig. 2 ist die erfindungsgemäße Behälteranordnung 4 mit einem druckfest verschließbaren Behälter und einem erfindungsgemäßen Druckerfassungssystem im Schnitt dargestellt. Der zur Aufnahme der Substanz dienende zylindrische und nach oben offene Behälter 11 ist in einem Außenbehälter 12 untergebracht und ist vorzugsweise aus Polytetrafluorethylen (PTFE) oder Quarz gefertigt. Zu Zwecken der Wärmeisolation ist zwischen Behälter 11 und Außenbehälter 12 ein Mantel 13 aus Hochtemperatur-Compound-Plastic (HTC) eingebracht und der Behälter 11 steht auf einer Isolationsbodenplatte 14. Unterhalb des Behälters 11 bzw. der Bodenplatte 14 ist im Außenbehälter 12 eine Durchtrittsöffnung 15 als Sollbruchstelle vorgesehen für den Fall, daß der Behälter 11 aufgrund zu hohen Innendruckes explodieren sollte.

Der Behälter 11 wird mit einem zylindrischen Deckel 16, der einen Dichtring 17 aufweist, druckfest verschlossen. Der Deckel 16 besteht wie der Behälter 11 vorzugsweise aus PTFE.

Auf dem Deckel 16 ist ein Adapterteil 18 zur Kopplung von Deckel 16 und nachfolgend beschriebenem Andrucksystem fest angebracht. In dem als nach oben offener Hohlzylinder geformten Adapterteil 18 liegt eine Stahlplatte 19, die von einem Stahlstift 21 mittig durchdrungen wird, dessen unteres Ende ein Fixiergewinde 20 zur Befestigung an das Adapterteil 18 aufweist und der ferner als Führungssäule für die Tellerfedern 22 dient.

Während sämtliche zuvor beschriebenen Bauteile 11 - 18 der Behälteranordnung 4 aus einem mikrowellen-durchlässigen Material bestehen sollten um nicht durch Mikrowellen-Bestrahlung selbst erwärmt zu werden bzw. um die Erwärmung der in dem Behälter 11 befindlichen Substanz durch Mikrowellenbestrahlung nicht zu behindern, sind die Tellerfedern 22 aus Federstahl hergestellt. Federstahl gewährleistet besonders gute Federeigenschaften bezüglich der linearen Ausdehnung auch über größere Wegbereiche. Um die Eigenschaft der Linearität der Ausdehnung zu verstärken, sind mehrere Tellerfedern 22 kaskadenförmig übereinanderliegend angeordnet.

Die Anordnung der Tellerfedern 22 aus Federstahl hat jedoch im Mikrowellenfeld den Nachteil, daß sie sich erwärmt. Dies insbesondere, da die Abmessungen in einem bestimmten Verhältnis zur Wellenlänge der Mikrowellenstrahlung liegen, vor allem aber deshalb, weil die Anordnung Ecken und Winkel hat, die als Antennen wirken, so daß die Mikrowellenstrahlen in das Metall eindringen und dieses erhitzen. Das Erhitzen kann zum Glühen der Tellerfedern führen, mit der Folge, daß deren Federcharakteristik nachhaltig negativ beeinflußt wird und die lineare Ausdehnung der Anordnung nicht mehr gewährleistet ist.

Um dem zuletzt genannten negativen Effekt zu begegnen werden die Tellerfedern 22 von einem Käfig 23 umgeben. Dieser Käfig 23 besteht ebenfalls aus Metall, vorzugsweise aus Edelstahl. Er zeichnet sich jedoch dadurch aus, daß er eine polierte Oberfläche hat und daß die Kanten abgerundet sind. Zudem liegen die Abmessungen des Käfigs 23, d.h. Durchmesser und axiale Länge, vorzugsweise zwischen einem Viertel und einer ganzen Wellenlänge der verwendeten Mikrowellenstrahlung. Ein solcher Käfig 23 wird durch Mikrowellenbestrahlung praktisch nicht erwärmt und wirkt als Faraday'scher Käfig bezüglich der Tellerfedern 22. Zusätzlich ist die Oberfläche des Metallkäfigs 23 vorzugsweise mit einem Material, wie beispielsweise PTFE, beschichtet, das gegen aggressive Chemikalien resistent ist, um zu verhindern, daß die Metalloberfläche durch die Chemikalien angegriffen wird.

Der Metallkäfig 23 ist praktisch ein Hohlzylinder mit einer offenen Stirnseite, der über die Tellerfeder-Anordnung gestülpt wird. Er ist außen in dem Adapterteil 18 und innen durch den Metallstift 21 geführt, dessen oberes Ende durch eine mittige Bohrung in der geschlossenen oberen Stirnseite des Käfigs 23 geführt wird. Da der Metallkäfig 23 mit seiner geschlossenen Stirnseite auf den Tellerfedern 22 aufliegt, können diese durch Niederdrücken des Käfigs 23 zusammengedrückt werden. Hierzu weist das Adapterteil 18 entsprechende Aussparungen 33 zur Aufnahme des niedergedrückten Metallkäfigs 23 auf.

Auf dem Käfig 23 ist eine Andruckschraube 24 so aufgesetzt, daß deren untere Stirnfläche auf der oberen Stirnfläche des Käfigs 23 rotations-beweglich aufliegt. Die Andruckschraube 24 wird mittels einer umlaufenden Kante an der unteren Stirnseite auf dem Käfig 23 geführt, so daß die Rotationsachse der Andruckschraube 24 mit der Längsachse des zylindrischen Käfigs 23 zusammenfällt.

Die Andruckschraube 24 wird durch eine Durchtrittsöffnung in der oberen Stirnseite des Außenbehälters 12 eingeführt, an deren Innenseite ein Gewinde 32 vorgesehen ist, in das die Andruckschraube 24 eingreift. Durch das Einschrauben der Andruckschraube 24 in den Außenbehälter 12 wird der Metallkäfig 23 niedergedrückt. Die Tellerfedern 22 übertragen die Kraft auf die Stahlplatte 19 und damit indirekt auf das Adapterteil 18 und den Deckel 16. Da der mit der Stahlplatte 19 verbundene Stahlstift 21 nicht durch den Käfig 23 nach unten gehalten wird, sondern durch die Bohrung in der oberen Stirnseite des Käfigs 23 vertikal frei beweglich ist, bleibt auch der Deckel 16 auf dem Behälter 11 in gewissen Grenzen vertikal frei beweglich. Entsprechend der Federkraft der Tellerfeder-Anordnung stellt sich ein Gleichgewicht ein zwischen dem Druck durch die Andruckschraube 24 nach unten und dem Innendruck im Behälter 11 nach oben. Durch das Einschrauben der Andruckschraube 24 in den Außenbehälter 12 zu Beginn des Verfahrens wird die Andruckanordnung vorgespannt. Die Tellerfedern 22 müssen dabei so ausgewählt werden, daß der Innenbehälter 11 durch den angepressten Deckel 16 während des gesamten Verfahrens druckfest verschlossen bleibt.

In der Andruckschraube 24 ist ferner mittig eine Bohrung angebracht, deren Durchmesser mindestens dem Durchmesser des Stahlstiftes 21 entspricht, so daß dieser durch die obere Stirnseite des Käfigs 23 hindurch in die Andruckschraube 24 hineinreichen kann, wenn der Deckel 16 aufgrund des Innendruckes im Behälter 11 nach oben bewegt wird. In die Bohrung der Andruckschraube 24 wird ein Schieber 5 eingeführt, dessen unteres stiftförmiges Ende auf dem Stahlstift 21 aufliegt und der am oberen Ende eine Verbreiterung über den Durchmesser der Bohrung hinaus aufweist. Der Schieber 5 ist aus einem mikrowellen-durchlässigem Material wie z.B. Kunststoff oder Keramik hergestellt. An der Oberseite dieser Verbreiterung weist der Schieber 5 eine Reflexionsfläche 25 auf, die in einem rechten Winkel zur Längsachse des Schiebers 5 und der gesamten Anordnung 4 ausgerichtet ist. Die obere Stirnseite 26 des Außenbehälters 12 ist ebenfalls reflektierend ausgebildet und in einem rechten Winkel zur Längsachse der gesamten Anordnung 4 ausgerichtet, um als Referenzfläche dienen zu können. Diese Referenzfläche 26 ermöglicht eine genauere Erfassung der Druckänderungen in den Behältern 11, da immer die exakte (Höhen-)Position des Behälters 11 im Gehäuse 1 der Vorrichtung berücksichtigt wird, die Meßvorrichtung 6 sich somit selbst justiert.

In Verlängerung der Längsachse ist oberhalb der Behälteranordnung 4 an der Decke 27 des Mikrowellen-Gehäuses 1 die optische Wegerfassungsvorrichtung 6 angebracht. Sie ist von einem Metallröhrchen 28 umgeben, das in den Innenraum des Gehäuses 1 hineinragt und auf gleichem Potential wie das Gehäuse 1 liegt, so daß die optische Wegerfassungsvorrichtung 6 durch das Metallröhrchen 28 von den Mikrowellenstrahlen abgeschirmt wird.

Als optische Wegerfassungsvorrichtung 6 wird vorteilhafterweise ein handelsüblicher Triangular-Laser-Dioden-Sensor verwendet. Er besteht im wesentlichen aus einem Lichtsender 29, der auf die Reflexionsfläche 25 des Schiebers 5 gerichtetes Licht 31 aussendet, und einem Lichtempfänger 30, der das vom Schieber 5 reflektierte Licht 31 aufnimmt. Der Triangular-Laser-Dioden-Sensor 6 ist so beschaffen, daß sich bei einer Änderung des Abstandes zwischen Reflexionsfläche 25 und Lichtsender 29 bzw. Lichtempfänger 30 der Reflexionswinkel des Lichtes 31 und dadurch die Intensität des von dem Lichtempfänger 30 aufgenommenen reflektierten Lichtes 31 ändert. Diese Änderung der Lichtintensität wird von der mit dem Lichtempfänger 30 verbundenen Auswerteeinheit 8 in eine Änderung des Innendruckes im Behälter 11 umgerechnet. Entsprechend der Änderung des Innendruckes wird sodann über ein Steuerschaltungsteil 10 die Leistung des Mikrowellengenerators 2 und damit der Mikrowellenstrahlung gesteuert.

Anstelle des eben beschriebenen Verfahrens der Druckerfassung mittels eines Triangular-Laser-Dioden-Sensors 6 kann die Änderung des Innendruckes im Behälter 11 auch auf andere Weise ermittelt werden. Beispielsweise hat die Änderung des Abstandes zwischen Reflexionsfläche 25 und Lichtsender 29 bzw. Lichtempfänger 30 auch eine Phasenverschiebung und eine veränderte Laufzeit des reflektierten Lichtes 31 zur Folge. Die Änderungen dieser beiden Größen können mit entsprechenden optischen Erfassungsvorrichtungen 6 ebenso erfasst und in Änderungen des Innendruckes umgerechnet werden.

Zusätzlich zur Erfassung des Innendruckes bzw. der Druckänderung im Behälter 11 kann selbstverständlich auch die Temperatur im Behälter 11 mit entsprechenden Vorrichtungen gemessen und kontrolliert werden. Da solche Vorrichtungen zum allgemeinen Stand der Technik gehören und nicht Gegenstand der vorliegenden Erfindung sind, wird an dieser Stelle nicht näher darauf eingegangen.

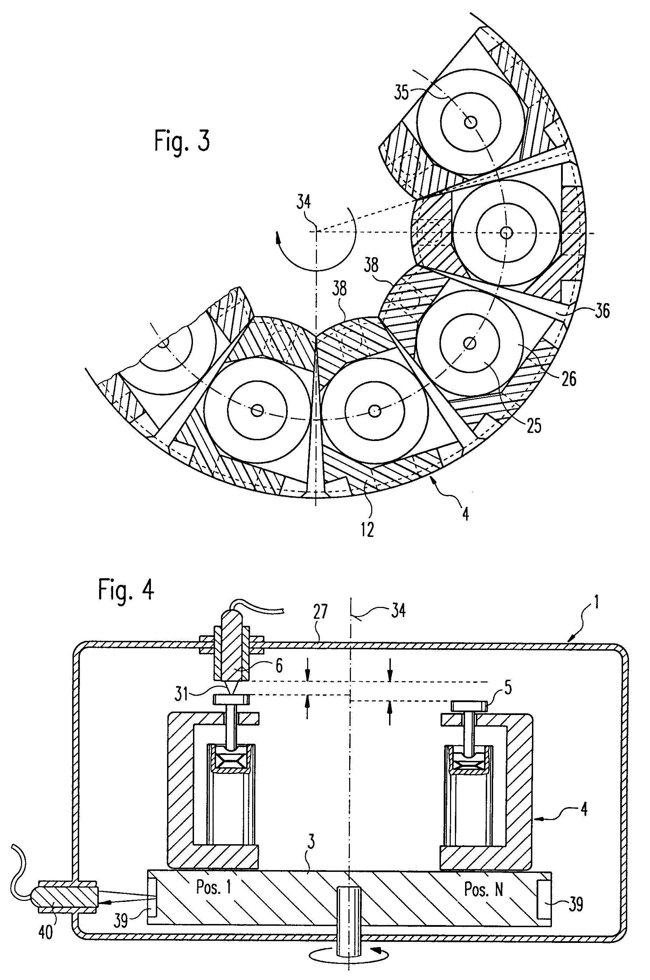

In Fig. 3 ist ein weiteres Ausführungsbeispiel der erfindungsgemäßen Vorrichtung dargestellt. Teile, die anhand des obigen Ausführungsbeispieles erläutert wurden, sind in dem folgenden Ausführungsbeispiel mit den gleichen Bezugszeichen gekennzeichnet; ihre Funktion wird nicht nochmals erklärt.

In diesem Beispiel werden in dem Mikrowellengehäuse 1 mehrere Behälteranordnungen 4 gleichzeitig untergebracht, so daß mit der Vorrichtung gleichzeitig eine größere Menge einer chemischen Substanz behandelt werden kann. Fig. 3 zeigt die Anordnung von in diesem Fall zehn Behälteranordnungen 4 ausschnittweise in Draufsicht. Die Anzahl der möglichen Behälter ist prinzipiell nicht beschränkt, eine obere Grenze liegt ausschließlich am erforderlichen Platzbedarf der Behälteranordnungen 4 und der Größe des Gehäuses 1.

Die Behälteranordnung 4 bzw. die Außenformen der Außenbehälter 12 sind Segmentförmig gestaltet, der Aufbau der Behälteranordnungen 4 entspricht dem anhand von Fig. 2 erläuterten. Die Segmente 4 sind auf einer dreh- oder schwenkbaren kreisförmigen Platte 3 rotationssymmetrisch um deren Mittelpunkt bzw. Drehachse 34 angeordnet.

An der zur Drehachse 34 der Platte 3 zeigenden Stirnseiten der Segmente 4 sind zudem Bohrungen 38 eingebracht, an die ein Luftkühlungssystem anschließbar ist. Die einströmende Luft umströmt den Mantel 13 zwischen Behälter 11 und Außenbehälter 12 und verhindert so eine übermäßige Erhitzung des Behälters 11 bei den ablaufenden Reaktionen der darin befindlichen chemischen Substanz.

Die Druckerfassung erfolgt auf einer kreisförmigen Umlautbahn 35, die durch die Längsachsen der umlaufenden Anordnungen 4 aus Fig. 2 bzw. durch die umlaufenden Mittelpunkte der Reflexionsflächen 25 der einzelnen Schieber 5 gebildet wird. Um die Meßwerte der einzelnen Segmente 4 eindeutig voneinander trennen zu können, befinden sich zwischen den Referenzflächen 26 der Segmente 4 Spalten 36. Die Flächen der Reflexionsflächen 25 und der Referenzflächen 26 sind so groß gewählt, daß die Ansprechzeit des Sensors 6 ausreicht, die Meßwerte aufzunehmen.

Wie aus Fig. 4 zu entnehmen ist, genügt zur Erfassung des Innendruckes in den Behältern 11 eine einzige optische Wegerfassungsvorrichtung 6 an der Decke 27 des Mikrowellengehäuses 1. Die optische Wegerfassungsvorrichtung 6 befindet sich an einer Stelle oberhalb der Umlaufbahn 35 der Reflexionsflächenmittelpunkte.

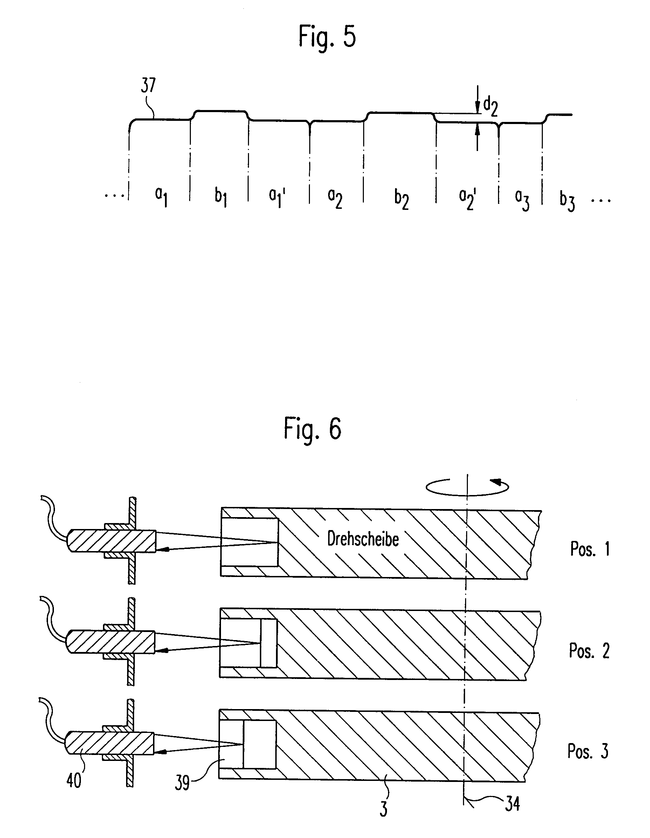

Ein Beispiel einer von einer solchen optischen Wegerfassungsvorrichtung 6 aufgezeichneten Meßkurve 37 ist ausschnittweise in Fig. 5 dargestellt. Dabei bezeichnen aᵢ und aᵢ' die Meßwertbereiche in den Bereichen der Referenzfläche 26 vor bzw. nach der Reflexionsfläche 25 der Behälteranordnung Nr. i, und bᵢ bezeichnet den Meßwertbereich in dem Bereich der Reflexionsfläche 25 der Behälteranordnung Nr. i. Zwischen den Meßwertbereichen aᵢ' und aᵢ₊₁ ist jeweils eine Polstelle vorhanden, die durch die Spalten 36 zwischen den Segmenten verursacht wird und die eine eindeutige Trennung der Meßwertbereiche der Behälteranordnungen Nr. i und Nr. i+1 erlaubt. Der Index i läuft dabei von 1 bis N, wobei N die Anzahl der Segmente 4 auf der drehbaren Platte 3 ist.

Wenn der Schieber 5 des Segmentes Nr. i über die obere Stirnseite 26 des Außenbehälters 12 des entsprechenden Segmentes 4 herausragt, so wird von der optischen Wegerfassungsvorrichtung 6 ein Höhenunterschied dᵢ zwischen Reflexionsfläche 25 und Referenzfläche 26 der Behälteranordnung Nr. i aufgezeichnet. Aus der Differenz der Höhenunterschiede dᵢ zwischen zwei Umläufen der Rotordrehung wird die Druckänderung im Behälter 11 des Segmentes Nr. i ermittelt, wobei in die Berechnung vor allem die Federkonstanten der Tellerfedern 22 eingehen.

Wie in Fig. 4 angedeutet, muß die Druckänderung nicht in allen Segmenten 4 den gleichen Wert betragen, die Schieber 5 können vielmehr aufgrund unterschiedlicher Innendrücke in den Behältern 11 unterschiedlich weit über die Referenzflächen 26 herausragen. Die Steuerung der Mikrowellenleistung durch die Auswerteeinheit 8 wird in der Regel aufgrund der größten auftretenden Druckänderung erfolgen. Die Rotation der Platte 3 und damit der Segmente 4 muß so schnell erfolgen, daß die Pausen zwischen zwei Meßwerten eines Segmentes nicht zu groß sind, und darf andererseits nicht zu schnell sein, damit die Ansprechzeit der optischen Wegerfassungsvorrichtung 6 bei entsprechender Größe der Reflexions- und Referenzflächen 25 und 26 ausreicht. Hierzu können beispielsweise die Drehgeschwindigkeit der Platte 3 etwa 10-20 U/min, was einem Meßintervall von etwa 3-6 Sekunden entspricht, und der Durchmesser der Reflexionsfläche 25 etwa 30-40 mm betragen.

Ein generelles Problem bei der Erfassung der Behälteranordnungen 4 in einem rotierenden System ist die Kodierung der einzelnen Positionen. Die zur Druckmessung verwendete automatische Distanzabtastung kann hierzu auf verschiedene Weisen auch zur Kodierung der Behälteranordnungen 4 herangezogen werden. Hierbei ist es möglich entweder nur eine der Behälteranordnungen 4, zum Beispiel als Behälter Nr. 1, zu kodieren oder aber eine Absolut-Kodierung an allen Behälteranordnungen 4 vorzunehmen. Die Kodierung ist für die Zuordnung der Meßergebnisse der Druckänderungen und für eine automatische Entnahme durch Roboter erforderlich.

Zum Zwecke der Kodierung sind in die drehbare Platte 3 an den Positionen unterhalb der Segmente 4 jeweils kodierte Bohrungen 39 angebracht. Die Form der Bohrungen 39 ist prinzipiell beliebig. Entscheidend ist eine reflektierende Fläche in der Bohrung 39 und eine unterschiedliche Tiefe aller Bohrungen 39. In Höhe der Bohrungen 39 der Platte 3 ist an einer Stelle des Mikrowellen-Gehäuses 1 eine Kodierungs-Erfassungsvorrichtung 40 angeordnet, deren Aufbau und Funktionsweise der oben erläuterten optischen Wegerfassungsvorrichtung 6 entsprechen. Die Kodierungsbohrungen 39 können anstatt in der Platte 3 auch in den Segmenten 4 selbst vorgesehen sein mit entsprechend höher positionierter Kodierungs-Erfassungsvorrichtung 40.

Die Funktionsweise der Kodierung wird nun anhand von Fig. 6 näher erläutert. Gezeigt sind untereinander die Positionen von drei Segmenten 4, wobei der Übersichtlichkeit halber nur die Ausschnitte der Platte 3 und der Kodierungs-Erfassungsvorrichtung 40 dargestellt sind. Die Kodierungsbohrungen 39 der drei Positionen haben eine unterschiedliche Tiefe, wodurch die Positionen eindeutig voneinander zu unterscheiden sind. Vor dem Start einer Reaktion wird die abgestufte Bohrungstiefe zusammen mit dem jeweiligen Meßwert der Schieberposition aufgezeichnet und später als Absolut-Kodierung der einzelnen Behälteranordnungen 4 verwendet.

Eine alternative Möglichkeit der Kodierung besteht darin, alle Bohrungen 39 mit gleicher Tiefe auszubilden und die von der Erfassungsvorrichtung 40 erfassten Signale nur als Steuersignale für die optische Wegerfassungsvorrichtung 6 dienen und anzeigen, daß ein Behälter in Meßposition ist. In diesem Fall kann eine wesentlich einfachere und somit preisgünstigere Erfassungsvorrichtung verwendet werden. Um trotzdem eine Kodierung der Behälteranordnungen 4 zu erreichen, ist beispielsweise die Behälteranordnung Nr. 1 signifikant höher ausgerichtet als die übrigen Behälteranordnungen Nr. 2 bis Nr. N.

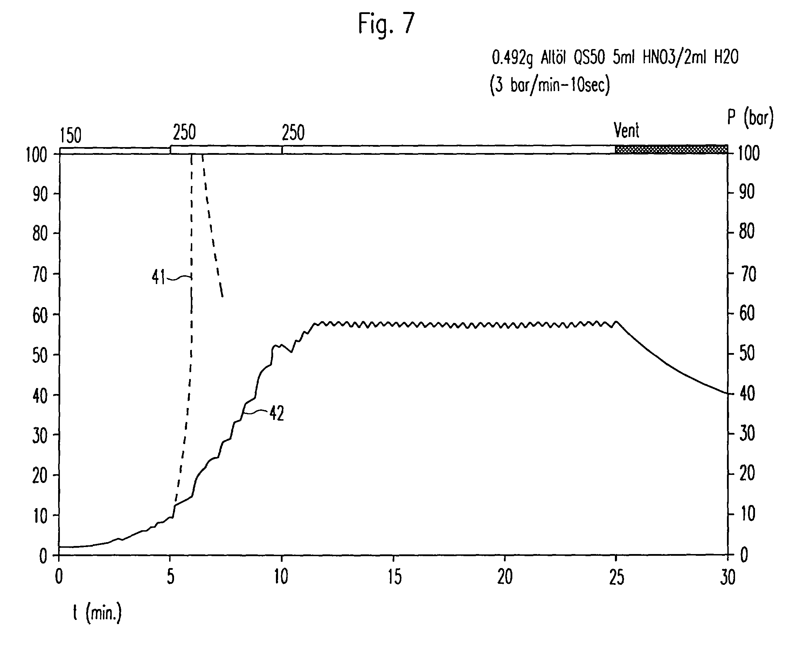

Abschließend soll anhand eines beispielhaft aufgezeichneten Druck-Zeit-Diagrammes in Fig. 7 die Funktionsweise des erfindungsgemäßen Verfahrens erläutert werden, bei welchem ein Außerkontrollegeraten der Reaktionen in den Behältern 11 weitestgehend vermieden werden kann.

In dem dargestellten Diagramm ist nach oben der Druck P im Bereich von 0 - 10 MPa (0 - 100 bar) und nach rechts die Zeit t im Bereich von 0 - 30 Minuten aufgetragen. Die Leiste oberhalb des Druck-Zeit-Diagrammes gibt die Leistung des Mikrowellengenerators 2 in Watt während des jeweiligen Zeitraumes an.

Als Regelgröße für die Steuerung der Mikrowellenleistung wird im Gegensatz zu bisher bekannten Verfahren nicht ein einfacher Druck- oder Temperaturgrenzwert, sondern ein Grenzwert des Differentialfaktors Druckänderung pro Zeit verwendet. Die Eingabe von einfachen Druck- oder Temperaturgrenzwerten erlaubt keine ausreichend sichere Steuerung, da Reaktionen je nach Substanzaufbau bei unterschiedlichen Werten beginnen. Wird beim Abschalten der Mikrowellenleistung ein größerer Teil der Probe bereits umgesetzt, so gerät die Reaktion automatisch außer Kontrolle und erzeugt einen extrem hohen Druck im Behälter 11. Dieser Fall ist in dem Diagramm durch die gestrichelte Kurve 41 gekennzeichnet.

Die durchgezogene Kurve 42 im Diagramm von Fig. 7 zeigt als Beispiel die kontrollierte Reaktion einer Einwaage von etwa 0,5 g Altöl bei einem vorgegebenen Grenzwert der Regelgröße von 0,3 MPa/min (3 bar/min) und einem Meßintervall von 10 Sekunden Während der ersten 5 Minuten wird die Reaktion durch Stufen von An- und Ausschalten der Mikrowellenstrahlung einer Leistung von 150 Watt unter Kontrolle gehalten, so daß die Druckänderung den Grenzwert von 0,3 MPa/min (3 bar/min) nicht überschreitet. Die Reaktion wird während der nächsten 5 Minuten auf gleiche Weise bei einer Mikrowellenleistung von 250 Watt kontrolliert. Anschließend wird der Druck bei etwa 6 MPa (60 bar) durch An- und Ausschalten bei 250 Watt für 15 Minuten konstant gehalten. Danach setzt bei abgeschalteter Mikrowellenstrahlung die Kühlung ein. Die Verwendung von Mikrowellenstrahlung ist für eine genaue und sichere Steuerung der Reaktionen in den Behältern 11 besonders vorteilhaft, da die Energiezufuhr durch Regelung bzw. Abschalten des Mikrowellengenerators 2 sofort regelbar bzw. stoppbar ist.

Das anhand von Fig. 7 beschriebene Verfahren ist prinzipiell unabhängig von der Art der verwendeten Druckmessung.

## Patentansprüche

1. Vorrichtung zum Behandeln einer chemischen Substanz durch Erhitzen unter Druck, mit einem den Durchtritt von Mikrowellenstrahlung behindernden Gehäuse (1), einer mit dem Innenraum des Gehäuses (1) verbundenen Mikrowellenquelle (2), mindestens einem druckfest verschließbaren und zur Aufnahme der Substanz dienenden Behälter (11) aus mikrowellen-durchlässigem Material, einem durch den Druck in dem Behälter (11) verstellbaren Schieber (5) mit einer Reflexionsfläche (25), einem Lichtsender (29), der auf den Schieber (5) gerichtetes Licht (31) aussendet, das von dem Schieber (5) reflektiert wird, einem Lichtempfänger (30), der das reflektierte Licht (31) aufnimmt und auswertet, und einem mit dem Lichtempfänger (30) verbundenen Steuerschaltungsteil (10) für die Mikrowellenquelle (2),
**dadurch gekennzeichnet,**
daß der Lichtsender (29), der Lichtempfänger (30) und die Reflexionsfläche (25) an dem Schieber (5) so angeordnet sind, daß durch eine Änderung der Schieberstellung der Abstand der Reflexionsfläche (25) von dem Lichtsender (29) und/oder Lichtempfänger (30) geändert wird.

2. Vorrichtung nach Anspruch 1,
**dadurch gekennzeichnet,**
daß Lichtsender (29), Lichtempfänger (30) und Reflexionsfläche (25) so angeordnet sind, daß durch die Änderung des Abstandes der Reflexionsfläche (25) von dem Lichtsender (29) und/oder Lichtempfänger (30) der Reflexionswinkel geändert wird.

3. Vorrichtung nach Anspruch 2,
**dadurch gekennzeichnet,**
daß durch die Änderung des Reflexionswinkels die Intensität des vom Lichtempfänger (30) aufgenommenen Lichtes (31) geändert wird, und daß aus dieser Intensitätsänderung eine Druckänderung im Behälter (11) ermittelbar ist.

4. Vorrichtung nach Anspruch 1,
**dadurch gekennzeichnet,**
daß Lichtsender (29), Lichtempfänger (30) und Reflexionsfläche (25) so angeordnet sind, daß die durch die Änderung des Abstandes der Reflexionsfläche (25) von dem Lichtsender (29) und/oder Lichtempfänger (30) verursachte Phasenverschiebung des reflektierten Lichtes (31) auswertbar ist.

5. Vorrichtung nach Anspruch 1,
**dadurch gekennzeichnet,**
daß Lichtsender (29), Lichtempfänger (30) und Reflexionsfläche (25) so angeordnet sind, daß der durch die Änderung des Abstandes der Reflexionsfläche (25) von dem Lichtsender (29) und/oder Lichtempfänger (30) verursachte Laufzeitunterschied des reflektierten Lichtes (31) auswertbar ist.

6. Vorrichtung nach einem der vorhergehenden Ansprüche,
**dadurch gekennzeichnet,**
daß Lichtsender (29) und Lichtempfänger (30) von einer Abschirmung (28) umgeben sind, die auf gleichem Potential wie das Gehäuse (1) liegt, um von der Mikrowellenstrahlung abgeschirmt zu werden.

7. Vorrichtung nach einem der vorhergehenden Ansprüche,
**dadurch gekennzeichnet,**
daß Lichtsender (29) und Lichtempfänger (30) in den Innenraum des Gehäuses (1) hineinragen, um den Abstand zwischen ihnen und der Reflexionsfläche (25) zu verkleinern.

8. Vorrichtung zum Behandeln einer chemischen Substanz durch Erhitzen unter Druck, mit einem den Durchtritt von Mikrowellenstrahlung behindernden Gehäuse (1), einer mit dem Innenraum des Gehäuses (1) verbundenen Mikrowellenquelle (2), mindestens einem durch einen Deckel (16) druckfest verschließbaren und zur Aufnahme der Substanz dienenden Behälter (11) aus mikrowellen-durchlässigem Material, einer zum Andrücken des Deckels (16) gegen den Behälter (11) dienenden federnden Andrückanordnung (18-24),
**dadurch gekennzeichnet,**
daß die Andrückanordnung (18-24) mehrere kaskadenförmig übereinander angeordnete metallische Tellerfedern (22) enthält, und
daß die Tellerfeder-Anordnung (19-22) von einem Käfig (23) zur Abschirmung gegen Mikrowellenstrahlung umgeben ist, um eine Erhitzung der Tellerfeder-Anordnung (19-22) durch die Mikrowellenbestrahlung zu verhindern.

9. Vorrichtung nach Anspruch 8,
**dadurch gekennzeichnet,**
daß der Käfig (23) aus Metall ist und seine Abmessungen in bezug auf die Wellenlänge der Mikrowellenstrahlung so gewählt sind, daß er sich durch die Mikrowellen nicht erhitzt.

10. Vorrichtung nach Anspruch 8 oder 9,
**dadurch gekennzeichnet,**
daß die Oberfläche des Käfigs (23) poliert ist.

11. Vorrichtung nach Anspruch 9 oder 10,
**dadurch gekennzeichnet,**
daß der Käfig (23) einen Hohlzylinder mit einer geschlossenen Stirnwand bildet, dessen Durchmesser und axiale Länge jeweils etwa zwischen einem Viertel und einer ganzen Wellenlänge der Mikrowellen betragen.

12. Vorrichtung nach einem der Ansprüche 8 bis 11,
**dadurch gekennzeichnet,**
daß die äußere Oberfläche des Käfigs (23) poliert ist.

13. Vorrichtung nach einem der Ansprüche 8 bis 12,
**dadurch gekennzeichnet,**
daß die Kanten des Käfigs (23) abgerundet sind.

14. Vorrichtung nach einem der Ansprüche 8 bis 13,
**dadurch gekennzeichnet,**
daß die Oberfläche des Käfigs (23) mit einem Material beschichtet ist, das gegen aggressive Chemikalien resistent ist.

15. Vorrichtung nach einem der Ansprüche 8 bis 14,
**dadurch gekennzeichnet,**
daß ein Druckindikator (5, 6) vorgesehen ist, der die durch den Druck in dem Behälter (11) veränderbare Stellung des Deckels (16) auf dem Behälter (11) auswertet.

16. Vorrichtung nach Anspruch 15,
**dadurch gekennzeichnet,**
daß der Druckindikator (5, 6) aus einem Schieber (5), der durch den Druck im Behälter (11) verschiebbar ist, und einer Sensoreinheit (6) besteht.

17. Vorrichtung nach Anspruch 16,
**dadurch gekennzeichnet,**
daß der Druckindikator (5, 6) gemäß einem der Ansprüche 1 bis 7 ausgebildet ist.

18. Vorrichtung nach einem der Ansprüche 8 bis 17,
**dadurch gekennzeichnet,**
daß mehrere Behälter (11) in dem Gehäuse (1) auf einer dreh- oder schwenkbaren Platte (3) angeordnet sind, um gleichzeitig mehrere Behälter (11) zu behandeln.

19. Vorrichtung nach Anspruch 18,
**dadurch gekennzeichnet,**
daß zur Erfassung der Druckänderungen in den Behältern (11) nur eine Sensoreinheit (6) vorgesehen ist.

20. Vorrichtung nach Anspruch 18 oder 19,
**dadurch gekennzeichnet,**
daß eine Kodierungsvorrichtung (39, 40) zur Kodierung der Positionen der Behälter (11) auf der Platte (3) vorgesehen ist.

21. Vorrichtung nach Anspruch 20,
**dadurch gekennzeichnet,**
daß die Kodierungsvorrichtung (39, 40) aus einer Kodierungs-Erfassungsvorrichtung (40) und aus Bohrungen (39) von jeweils unterschiedlicher Tiefe an den Positionen der Behälter (11) in der Platte (3) und/oder in den Behältern (11) besteht.

22. Vorrichtung nach Anspruch 21,
**dadurch gekennzeichnet,**
daß die Kodierungs-Erfassungsvorrichtung (40) eine Sensoreinheit (6) von gleichem Aufbau und gleicher Funktionsweise wie die des Druckindikators (5, 6) ist, und daß die Bohrungen (39) Reflexionsflächen aufweisen.

23. Verfahren zum Behandeln einer chemischen Substanz durch Erhitzen unter Druck, bei dem die Substanz in einem druckfest verschließbaren Behälter (11) erhitzt wird, bei dem der Druck in dem Behälter (11) über eine bestimmte Zeit gemessen wird und bei dem die Zufuhr von Heizleistung zu dem Behälter (11) in Abhängigkeit von dem Meßwert gesteuert wird,
**dadurch gekennzeichnet,**
daß der Differentialquotient des Druckes nach der Zeit ermittelt wird, und daß die Zufuhr von Heizleistung unterbrochen wird, wenn der Differentialquotient einen bestimmten Maximalwert überschreitet.

24. Verfahren nach Anspruch 23,
**dadurch gekennzeichnet,**
daß zum Erhitzen der Substanz in den Behältern (11) Mikrowellenstrahlung verwendet wird.

25. Verfahren nach Anspruch 23 oder 24,
**dadurch gekennzeichnet,**
daß der Differentialquotient mittels eines Druckindikators (5, 6) gemäß einer Vorrichtung nach einem der Ansprüche 1 bis 22 ermittelt wird.
